# EUROPEAN PATENT APPLICATION

(11) **EP 4 609 714 A1**
(43) Date of publication of application: **03.09.2025**
(21) Application number: 24386022.8
(22) Date of filing: 01.03.2024
(51) Int. Cl.: A01N 63/32, A01N 37/44, A01P 3/00

(54) **COMPOSITION AND USE OF THE COMPOSITION FOR CONTROLLING AND/OR COMBATTING A FUNGAL PLANT PATHOGEN AND/OR PREVENTING AND/OR TREATING A FUNGAL DISEASE IN A PLANT**

(71) Applicant: Vioryl Chemical and Agricultural Industry, Research S.A., 19014 Afidnes (GR)
(72) Inventor: Ntourtoglou, Vasileios, 17122 Nea Smyrni Attiki (GR); Dermitzaki, Emmanouela, 11473 Athens (GR)
(74) Representative: Masoula, Christina

(57) **Abstract**

Composition and use of the composition for controlling and/or combatting a fungal plant pathogen and/or preventing and/or treating a fungal disease in a plant

The present invention refers to a composition comprising
- a strain of *Torulaspora delbrueckii* and
- a betaine.

Further, the invention refers to the use of the composition for controlling and/or combatting a fungal plant pathogen and/or preventing and/or treating a fungal disease in a plant.

## Description

### FIELD OF THE INVENTION

The present invention relates to a composition and the use of the composition for controlling and/or combatting a fungal plant pathogen and/or preventing and/or treating a fungal disease in a plant.

### BACKGROUND OF THE INVENTION

Phytopathogenic fungi attack a huge range of crops and ornamental plants causing pre- and post-harvest rots that destroy production or degrade the quality of the final product and consequently its commercial value. For the control of fungal pathogens, chemical fungicides are widely used, many of which have been classified as highly toxic to humans and non-target organisms. In addition, many reports show that plenty of phytopathogenic microorganisms have developed resistance to several groups of chemical fungicides, thus reducing their effectiveness. Therefore, the European Commission launched a new set of rules with the aim of halving the use of chemical pesticides by 2030. Hence, the need to find alternative, sustainable solutions that can be used as part of an integrated pest management strategy, is deemed necessary.

Yeasts are eukaryotic microorganisms that have been extensively studied and historically used on a very large scale in the food and wine industry. Their biotechnological capacity to bioconvert simple substrates into high added value products has also been exploited. Besides the extensive use of yeasts in many domains their use in agriculture is rather limited. Mainly live cells or cell components of the yeast *Saccharomyces cerevisiae* are used in agricultural practice as biostimulants and inducers of the endogenous plant defense.

In recent years, plant protection products based on one or more microbial agent(s) have appeared in the market. Products based on beneficial microorganisms such as *Bacillus sp* and plant growth promoting rhizobacteria have been widely studied and tested for their agricultural potential. Plant microbiome has been researched for the identification of strains that could potentially be used as natural pest control agents.

However, the viability and effectiveness of beneficial microorganisms contained in biocontrol compositions can be affected by a large number of environmental stresses. Among the most critical stresses that threaten the survival of beneficial microbes in compositions are oxidative and osmotic stresses.

Besides the survival ability of beneficial microorganisms within adverse conditions of a composition, effectiveness of a respective composition is also dependent on the ability of the beneficial microorganisms to survive and multiply within injured or healthy plant tissues. Fruit tissue is associated with the accumulation of reactive oxygen species (ROS) such as hydrogen peroxide and superoxide anions that affect host behaviour (Macarisin, D., Droby, S., Bauchan, G., Wisniewski, M., 2010. Superoxide anion and hydrogen peroxide in the yeast antagonist-fruit interaction: a new role for reactive oxygen species in postharvest biocontrol? Postharvest Biology and Technology 58,194-202) or pathogen infectivity (Macarisin, D., Cohen, L., Eick, A., Rafael, G., Belausov, E., Wisniewski, M., Droby, S., 2007.Penicillium digitatum suppresses production of hydrogen peroxide in host tissue during infection of citrus fruit. Phytopathology 97, 1491-1500) and potentially the colonization ability of the beneficial yeast.

### OBJECT AND SOLUTION

In view of the foregoing, the object underlying the present invention is therefore to make available a composition which properly addresses the above-mentioned need.

This object is accomplished by a composition according to the independent claim 1 and the use of the composition according to claim 15. Preferred embodiments of the invention are defined in the dependent claims. Further preferred embodiments of the invention are defined in the present description. The subject-matter and wording, respectively of all claims is hereby incorporated into the description by explicit reference.

According to a first aspect, the present invention refers to a composition, in particular for controlling and/or combatting a fungal plant pathogen and/or for preventing and/or for treating a fungal disease in a plant, comprising
- a strain of *Torulaspora delbrueckii* and
- a betaine.

The present invention rests on the surprising finding that combining a strain of the non-saccharomyces yeast *Torulaspora delbrueckii* (anamorph Candida colliculosa) with a betaine results in an effective fungicidal composition with no or neglectable environmental impact and no or neglectable adverse effects for a user.

The composition can be used for the protection of sensitive crops of large scale and economic importance. Thus, the composition according to the present invention may also be termed as a biofungicide, i.e. fungicidal composition being environmentally friendly and non-hazardous (biocompatible), or as a plant protection product, i.e. a product for protecting plants against pathogens, in particular fungal pathogens.

In addition, the composition according to the present invention will also have a practical and economic importance as it represents a promising solution that is useful for covering the gap that the withdrawal of approved chemical active substances will create in the market. Thus, advantageously, the composition contributes to the achievement of the goals of the Green Deal established by the European Commission regarding the increase of biological inputs in agricultural production.

Advantageously, *Torulaspora delbrueckii* fulfills all the basic prerequisites of an effective and safe biocontrol agent like a) it has genetic stability b) it is not infectious or pathogenic to non-target organisms c) it survives for a long time in adverse environmental conditions and d) it has reduced nutritional requirements.

Further, it surprisingly turned out that betaines, apart from their synergistic role in plant protection, are able to mitigate any negative effects of external stresses such as oxidative and osmotic stresses and therefore advantageously enhance oxidative stress tolerance of *Torulaspora delbrueckii* and assists adaptation of *Torulaspora delbrueckii* in environments, in particular with high salt content and/or low water content, resulting in an overall improvement of fungicidal properties of *Torulaspora delbrueckii,* and thus of the composition according to the invention.

A further advantage of the composition according to the present invention refers to the fact that it does not leave any dangerous residues and can be used even on the harvest day. The composition is particularly ideal for fighting microbial pathogens such as botrytis whose appearance a few days before the harvest of the fruits could result in the complete degradation of the product, especially if it is to be fermented such as grapes, or to be eaten fresh like strawberries or berries.

The efficacy of *Torulaspora delbrueckii* is independent of the strain. The strains that have been tested in the composition according to the present invention have been i) isolated from grape must fermentations from native vineyards ii) isolated from other anthropogenic processes such as from the food industry (i.e. bread dough, fermented olives) iii) purchased from microbial collections iv) purchased as commercially available strains. All the tested strains have showed the same antifungal behaviour.

In an embodiment of the invention, the strain of *Torulaspora delbrueckii* comprises or is a natural, i.e. naturally occurring, strain (in other words: strain of natural origin) and/or a synthetic strain, i.e. a strain being produced in a laboratory or a comparable facility, for example, by means of chemical, genetic or biotechnological synthesis.

Preferably, the strain of *Torulaspora delbrueckii* comprises or is a natural strain.

Particularly, the strain of *Torulaspora delbrueckii* may be isolated from grape, must, grape must fermentations, wine, bread dough, fermented olives, beverages, fruit juices, cocoa and silage fermentations and dairy products.

Further, the strain of *Torulaspora delbrueckii* may comprise or is a strain deposited as NCYC 2629 (National Collection of Yeast Cultures), CGMCC No. 15162 (China General Microbiological Culture Collection Centre), DSM 26647, DSM 26648 (Leibniz Institute) or MUCL 27816 (BCCM microbial collection).

In a further embodiment of the invention, the betaine comprises or is a natural, i.e. naturally occurring, betaine, in particular glycine betaine (N,N,N-trimethylglycine).

Glycine betaine (GB) (N,N N-trimethylglycine) is one of the most common, compatible, watersoluble substances that contribute to osmotic adaptation for bacteria, fungi, algae, plants and animals (de Zwart, F.J., Slow, S., Payne, R.J., Lever, M., George, P.M., Gerrard, J.A., Chambers, S.T.,2003. Glycine betaine and glycine betaine analogues in common foods. Food Chemistry 83, 197-204; Rhodes, D., Hanson, A.D., 1993. Quaternary ammonium and tertiary sulfonium compounds in higher plants. Annual Review of Plant Physiology and Plant Molecular Biology I44, 357-384). GB stabilizes enzyme structure and activity, as well as membrane integrity against salt/osmotic stress (Ashraf, M., Foolad, M.R., 2007. Roles of glycinebetaine and proline in improving plant abiotic stress resistance. Environmental and Experimental Botany 59, 206-216; Boncompagni, E., Østerås, M., Poggi, M.C., Rudulier, D.L., 1999. Occurrence of choline and glycine betaine uptake and metabolism in the family Rhizobiaceae and their roles in osmoprotection. Applied and Environmental Microbiology 65, 2072-2077; Wang, S., Yao, Q., Tao, J., Qiao, Y, Zhang, Z., 2007. Co-ordinate expression of glycine betaine synthesis genes linked by the FMDV 2 A region in a single open reading frame in Pichia pastoris. Applied and Microbiology Biotechnology 77, 891-899). In addition to its role as an osmoprotectant, GB has been found to induce antioxidant defenses in many plant species. Although GB has been reported to be an effective osmoprotectant for yeasts such as *Saccharomyces cerevisiae* (Thomas, K.C., Hynes, S.H., Ingledew, W.M., 1994. Effects of particulate materials and osmoprotectants on very-high-gravity ethanolic fermentation by Saccharomycescerevisiae. Applied and Environmental Microbiology 60, 1519-1524) and *Pichia pastoris,* so far no application of this compound to non-saccharomyces has been reported. In this invention for the first time a glycine betaine is used to stabilize the non-saccharomyces *Torulaspora delbrueckii.* This compound used as a stabilizer of the microorganism and as an osmoregulating agent is at the same time a surfactant to increase the wettability and adhesiveness of the composition and is furthermore biocompatible and non-hazardous.

In a further embodiment of the invention, the betaine comprises or is a synthetic betaine. The synthetic betaine may in particular comprise or be a fatty acid amide (FAA, i.e. an amide formed from a fatty acid and an amine) having a betaine structure.

In particular, the betaine, in particular synthetic betaine, comprises or is an alkylamidoalkyl betaine, preferably alkylamidoethyl betaine, alkylamidopropyl betaine or a mixture thereof.

In a further embodiment of the invention, the betaine, in particular synthetic betaine, is selected from the group consisting of lauramidopropyl betaine, {[3-(dodecanoylamino)propyl] (dimethyl)ammonio}acetate, cocamidopropyl betaine and mixtures of at least two of the aforementioned betaines, in particular mixtures of at least two of the aforementioned synthetic betaines.

In a further embodiment of the invention, a liquid form, in particular an aqueous form, of the composition, preferably an aqueous solution containing the composition, has a concentration of the strain of *Torulaspora delbrueckii* from 10⁴ CFU/ml to 10¹³ CFU/ml, in particular 10⁴ CFU/ml to 10¹⁰ CFU/ml, preferably 10⁴ CFU/ml to 10⁹ CFU/ml.

In a further embodiment of the invention, the strain of *Torulaspora delbrueckii* has a proportion from 0.1 % by weight to 5 % by weight, in particular 0.1 % by weight to 4 % by weight, preferably 0.1% by weight to 2 % by weight, based on the total weight of the composition, in particular based on the total weight of a solid, in particular lyophilized, form of the composition.

In a further embodiment of the invention, the betaine has a proportion from 0.005 % by weight to 20 % by weight, in particular 0.5 % by weight to 15 % by weight, preferably 4 % by weight to 12 % by weight, for example 10 % by weight, based on the total weight of the composition.

In a further embodiment of the invention, the composition further comprises a stabilizer, in particular a further stabilizer in addition to the betaine. The stabilizer, in particular further stabilizer in addition to the betaine, is preferably a fermentable stabilizer. Particularly, the stabilizer, in particular further stabilizer in addition to the betaine, is selected from the group consisting of polyol, non-ionic surfactant, monosaccharide, oligosaccharide such as maltodextrin, polysaccharide and mixtures of at least two of the aforementioned stabilizers, in particular further stabilizers in addition to the betaine. Thus, resilience of the composition towards external stresses may be additionally enhanced.

In a further embodiment of the invention, the polyol is selected from the group consisting of propylene glycol, dipropylene glycol, ethylene glycol, polyethylene glycol, glycerin and mixtures of at least two of the aforementioned polyols.

The dipropylene glycol may be selected from the group consisting of 4-oxa-2,6-heptandiol, 2-(2-hydroxy-propoxy)-propan-1-ol, 2-(2-hydroxy-1-methyl-ethoxy)-propan-1-ol and mixtures of at least two of the aforementioned dipropylene glycols.

Further, the polyol may have a proportion from 3 % by weight to 50 % by weight, in particular 5 % by weight to 40 % by weight, preferably 10 % by weight to 30 % by weight, based on the total weight of the composition.

In a further embodiment of the invention, the non-ionic surfactant is a fatty acid ester. The fatty acid ester may particularly comprise a fatty acid unit, in particular a unit of a natural fatty acid, having 8 carbon atoms to 22 carbon atoms, in particular 16 carbon atoms to 20 carbon atoms. Further, the fatty acid ester may particularly comprise a polyol unit, in particular glycerin unit and/or sugar alcohol unit, in particular erythritol unit and/or sorbitol unit, as an alcohol component. Further, the fatty acid ester may be a fat or oil, in particular of animal or vegetable origin. Further, the fatty acid ester may be particularly a methyl-, ethyl-, propyl- or isopropyl ester, without excluding higher aliphatic alcohols. In other words, the fatty acid ester may particularly comprise a methyl alcohol unit, ethyl alcohol unit, n-propyl alcohol unit or isopropyl alcohol unit as an alcohol component. More specifically, the fatty acid ester may be selected from the group consisting of glycerol monooleate, polyoxyethylene ester of sorbitol with oleic acid, palmitic acid, stearic acid, capric acid, caprylic acid and mixtures of at least two of the aforementioned fatty acid esters.

Further, the non-ionic surfactant may have a proportion from 2 % by weight to 65 % by weight, in particular 2 % by weight to 60 % by weight, preferably 2 % by weight to 20 % by weight, based on the total weight of the composition.

The polysaccharide may be selected from the group consisting of xanthan gum, gellan gum, gum arabic and mixtures of at least two of the aforementioned polysaccharides.

Further, the polysaccharide may have a proportion from 0.01 % by weight to 0.5 % by weight, in particular 0.05 % by weight to 0.4 % by weight, preferably 0.09 % by weight to 0.3 % by weight, based on the total weight of the composition.

Further, it may be within the scope of the present invention that the composition comprises a stabilizer mixture comprising a polyol, a fatty acid ester, in particular glycerol monooleate, and/or a polysaccharide, in particular xanthan gum.

In a further embodiment of the invention, the composition further comprises an antioxidant. Thus, oxidative stability of the composition may be additionally improved. The antioxidant may be in particular selected from the group consisting of sulfur dioxide, tocopherols (E-306), ascorbic acid (E-300) and mixtures of at least two of the aforementioned antioxidants.

The antioxidant may have a proportion from 0.01 % by weight to 1 % by weight, in particular 0.02 % by weight to 0.8 % by weight, preferably 0.05 % by weight to 0.5 % by weight, based on the total weight of the composition.

Further, the composition may further comprise a preservative, in particular selected from the group consisting of citric acid, ascorbic acid, sorbic acid, propionic acid, acetic acid and mixtures of at least two of the aforementioned preservatives. Thus, protection against microbial spoilage can be advantageously facilitated.

The preservative may have a proportion from 0.01 % by weight to 0.8 % by weight, in particular 0.01 % by weight to 0.5 % by weight, preferably 0.05 % by weight to 0.1 % by weight, based on the total weight of the composition.

Further, the composition may further comprise a synergistic substance, in particular selected from the group consisting of lauric sulfate, ether with two or more ethylene oxides and mixtures of at least two of the aforementioned synergistic substances. Thus, microbial stability of the composition, especially at extreme temperatures, can be advantageously improved.

The synergistic substance may have a proportion from 0.01 % by weight to 0.5 % by weight, in particular 0.01 % by weight to 0.2 % by weight, preferably 0.05 % by weight to 0.1 % by weight, based on the total weight of the composition.

Further, the composition may comprise a further antimicrobial, in particular fungicidal, substance such as a copper fungicide, i.e. a copper containing fungicide.

Further, the composition may have a proportion of water from 10 % by weight to 90 % by weight, in particular 10 % by weight to 85 % by weight, preferably 15% by weight to 80%, based on the total weight of the composition.

Further, the composition may be preferably in the form of an aqueous liquid, in particular aqueous dispersion, aqueous solution, or aqueous suspension. Especially preferably, the composition may be an aqueous solution, in particular an aqueous spray solution, i.e. an aqueous solution that is provided to be sprayed.

When diluting the composition in water to create an aqueous liquid, a dispersion of *Torulaspora delbruckeii* - betaine is immediately and spontaneously created. More specifically, the dissolution of *Torulaspora delbruckeii* - betaine in water causes an automatic rearrangement of the system, with a reduction in the size of *Torulaspora delbruckeii-betaine* and results in the creation of a very fine dispersion of the entrapped *Torulospora delbruckeii* and betaines in the aqueous liquid. Thus, advantageously, 100% bioavailability of *Torulaspora delbruckeii* may be achieved, increasing the effectiveness of the compositions against target organisms.

Alternatively, the composition may be preferably in the form of a solid, in particular lyophilized, composition.

According to a second aspect, the present invention refers to the use of a composition according to the first aspect of the present invention for controlling and/or combatting a fungal plant pathogen and/or for preventing and/or for treating a fungal disease in a plant.

Preferably, the fungal disease is a rot disease, in particular a pre-harvest or post-harvest rot disease.

Further, the plant may be particularly selected from the group consisting of grapevine, berries, strawberries, mulberries, blueberries, rasberries, tomatoes and curcubits.

Further, the fungal plant pathogen may be particularly botrytis such as *Botrytis cinerea,* or other mold inducing plant pathogens such as *Penicillium sp, Rhizobus sp, Alternaria sp* or *Fusarium sp.*

With respect to further features and advantages of the use according to the second aspect of the present invention, in particular with respect to the composition, reference is made in its entirety to the embodiments described under the first aspect of the present invention, which do apply mutatis mutandis.

According to a third aspect, the present invention refers to a method for controlling and/or combatting a fungal plant pathogen and/or for preventing and/or treating a fungal disease in a plant comprising the step of
- applying, in particular spraying, an aqueous liquid, in particular an aqueous solution, containing a composition according to the first aspect of the present invention on a/the plant in need thereof.

With respect to further features and advantages of the method according to the third aspect of the present invention, in particular with respect to the composition, reference is made in its entirety to the previous description, in particular the embodiments described under the first aspect of the present invention, which do apply mutatis mutandis.

Further features and advantages of the invention will become clear from the following figure, description thereof and examples in conjunction with the subject-matter of the dependent claims. The individual features can be realized either singularly or severally in combination in one embodiment of the invention. The preferred embodiments merely serve for illustration and better understanding of the invention and are not to be understood as in any way limiting the invention.

### BRIEF DESCRIPTION OF THE FIGURE

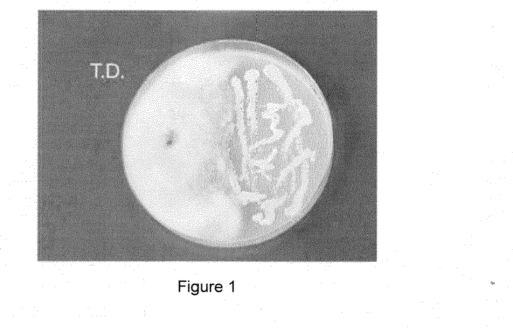

Figure 1 photographically shows a co-culture of the non-saccharomyces yeast *Torulaspora delbrueckii* (right part of the plate) with *botrytis* (left part of the plate).

### EXPERIMENTAL SECTION

### 1. Isolation and identification of Torulaspora delbruckeii from its natural habitat.

Grape samples from the Savvatiano and Assyrtiko varieties from two different vineyards (Attica and Nemea) were used in spontaneous laboratory fermentations. At the beginning of the spontaneous fermentation, sampling was carried out to analyze the microflora of the must.

Serial dilutions (10⁻¹ to 10⁻⁷) were performed for each sample and the diluted samples were cultured in selective and differential culture media. To isolate the yeasts from the samples, the selective medium MYP (Malt Yeast Peptone) was used [Composition: 7 g/L malt extract, 0.5 g/L yeast extract, 2.5 g/L peptone, 15 g/L agar] enriched with antibiotics (0.08 g/L biphenyl and 0.1 g/L chloramphenicol) to suppress the growth of nematode fungi and bacteria respectively.

The cultures were incubated at 25 °C for 5 days. Single colonies from plates were recultured on clean plates to ensure colony purity and genetic homogeneity. Single, pure colonies were then cultured in differential NSM (non-saccharomyces medium) to suppress the growth of saccharomyces and isolate "wild yeasts" (NSM composition: 20 g/L yeast extract, 10 g/L glucose, 10 g/L tryptone, 20 g/L agar, pH 2, the medium was enriched with 0.1% cycloheximide to suppress the growth of the Saccharomyces cerevisiae).

Isolated "wild yeast" colonies were tested *in vitro* for their ability to inhibit the growth of the phytopathogenic fungus *Botrytis cinerea.* The petri dish illustrates the mycostatic capacity of *Torulaspora delbruckeii.* The part of the petri dish coated with *Torulaspora delbruckeii* shows zero growth of the mycelial hyphae of the phytopathogenic fungus.

The strain with the best results from the *in vitro* tests was selected and then cultured in appropriate media. At the stage of exponential growth of the culture, sampling was carried out to identify the microorganism. Identification of the microorganism was performed by phenotypic differential diagnosis and the API 20 AUX Yeast Identification System (Biomerieux).

### 2. Culture of the non-saccharomyces Torulaspora delbrueckii for the preparation of a plant protection product

For the proliferation of the microorganism, a liquid culture was carried out in a laboratory bioreactor under aerobic conditions at a constant temperature of 30 °C. The nutrient substrate used had the following composition: 1 L deionized water, 10 g yeast extract, 10 g bacterial peptone, 2 g KH₂PO₄, 1g MgSO₄ × 7H₂O, 1g K₂HPO₄. The nutrient medium was sterilized in an autoclave at a temperature of 121 °C for 20 min, under a pressure of 0.1 mPa before inoculation with the microorganism. For the inoculation of the nutrient medium, pure colonies of the isolated microorganism that had been grown on a solid nutrient medium PDA (Potato Dextrose Agar) for 48 hours at 28 °C were used.

The yeast biomass was estimated a) directly by direct microscopic counting of yeast cells in a Neubaeur plate b) indirectly by spectrophotometry, by measuring the absorbance of the culture at a wavelength of 600 nm. When the yeast concentration reached the level of 10⁷ cells/ml, the culture medium together with *Torulaspora delbrueckii* cells was used for the experimental tests.

### 3. Production method of the final plant protection product.

The final plant protection product of this invention can be in liquid or solid form. The section below describes two possible ways to produce the liquid final product.

### 3.1 First method

A liquid culture of *Torulaspora delbrueckii* was prepared as described above. Then, glycine betaine and further auxiliary substances were added to the liquid culture.

### 3.2 Second method

Llyophilized *Torulaspora delbrueckii* of known concentration was hydrated. Then, glycine betaine and further auxiliary substances were added to the water containing the bloomed yeast.

After growing the microorganism (*Torulaspora delbrueckii*) in the liquid culture medium (first method) or preparing the microorganism by blooming of the lyophylized yeast (second method) an appropriate quantity of betaine is added. In the composition, the concentration of glycine betaine could be between 0.005 to 20% w/w and preferably 4 to 12% w/w. The betaines used as bioprotective substances in the composition belong to the categories of: a) synthetic betaines such as CAPB or b) natural betaines such as glycine betaine.

Then, non-ionic emulsifiers such as fatty acid esters with glycerin or other alcohols such as sorbitol, erythritol etc. are added. These esters may be used alone or in combination with other surfactants. An example of suitable esters is the group of sorbitol esters with fatty acids, such as the polyoxyethylene ester of sorbitol with oleic acid. The desired proportion of surfactants is between 2 and 60% w/w. of the preparation and preferably 2 and 20% w/w of the final preparation.

The esters can be derived from fats and oils of vegetable or animal origin, which are mixtures of natural fatty acids C8-C22 and preferably C16-C20, and can be methyl-, ethyl-, propyl- or isopropyl esters, without excluding higher aliphatic alcohols Desirable concentrations range from 30 to 65% w/w of the preparation and preferably in an ideal concentration so as to ensure the solubility of the final product.

Polyols are used to stabilize the compositions, e.g. propylene glycol and/or polyethylene glycol and/or glycerol and/or dipropylene glycol, with a desired ratio of 5 to 50% w/w of the formulation and preferably 10 to 30% w/w. In addition, glycerol monooleate can be added at a rate of 0.1 to 5% and preferably from 0.1 to 2% and/or xanthan gum at a rate of 0.01-0.09%.

The production of the product in solid form is achieved by mixing the solid lyophilized yeast of known CFU/g concentration with glycine betaine in a ratio ranging between 0.005 to 20% by weight of the final formulation.

Specific examples of the composition according to the present invention are shown in the following tables 1 and 2:

**table 1: first example of a composition according to the present invention**

| **Ingredients** | **% w/w** |
|---|---|
| Liquid culture of *Torulospora delbrueckii* (10⁷ CFU/ml) | 70 |
| **Glycine Betaine** present | 12 |
| Propylen glycol | 10 |
| Fatty acid esters with glycerine present | 7,5 |
| Xanthan qum | 0,3 |
| SO₂ | 0,15 |
| Citric acid | 0,05 |
| **Sum** | **100** |

**table 2: first example of a composition according to the present invention**

| **Ingredients** | **% k.β.** |
|---|---|
| Lyophilized yeast *Torulospora delbrueckii (10¹⁰ cfulg)* | 2 |
| Glycine Betaine | 12 |
| Polyethylene glycol | 3 |
| Water | 72,8 |
| Glycerine | 9,5 |
| Xantham gum | 0,15 |
| SO₂ | 0,5 |
| Citric acid | 0,05 |
| **Sum** | **100** |

### Application example of the proposed biofungicide to prevent and/or combat grey mould in vineyards.

Botrytis attacks all above-ground parts of the vine with the most serious damage occurring in the grape berries especially during the ripening stage. The formulation of the present invention can be used exclusively, in rotation or in combination with other botrycides for the protection of the vine. Ideally, the first intervention should be prophylactic and done before the establishment of the pathogen or at the first signs of infection when the disease pressure is still low. Consecutive applications during the developmental stage of the berries every 10-15 days are recommended especially at stages BBCH 77 - BBCH 85 and before harvesting when the risk of infection is greater.

When conditions favor the development of botrytis or in cases of extreme infestation, additional sprays and/or sprays with copper preparations are suggested. Recommended doses: 0.25-2% depending on i) the stage of plant development ii) the degree of infestation iii) the weather conditions iv) the use of other plant protection products.

The preparation should ideally be applied directly to the grape clusters for maximum protection. The tank mix preparation should be used within 8 hours. Before use, the tank mix needs to be agitated to avoid the formation of sediment. The biofunigicide of the current invention could be combined with copper fungicides and other microbial plant protection products.

## Claims

1. A composition comprising
- a strain of *Torulaspora delbrueckii* and
- a betaine.

2. The composition according to claim 1, wherein the strain of *Torulaspora delbrueckii* comprises a natural strain, in particular isolated from grape, must, grape must fermentations, wine, bread dough, fermented olives, beverages, fruit juices, cocoa and silage fermentations and dairy products.

3. The composition according to claim 1 or 2, wherein the betaine comprises a natural betaine, in particular glycine betaine.

4. The composition according to any of the preceding claims, wherein the betaine comprises a synthetic betaine, in particular selected from the group consisting of lauramidopropyl betaine, {[3-(dodecanoylamino)propyl] (dimethyl)ammonio}acetate, cocamidopropyl betaine, and mixtures of at least two of the aforementioned synthetic betaines.

5. The composition according to any of the preceding claims, wherein a liquid form of the composition has a concentration of the strain of *Torulaspora delbrueckii* from 10⁴ CFU/ml to 10¹³ CFU/ml, in particular 10⁴ CFU/ml to 10¹⁰ CFU/ml , preferably 10⁴ CFU/ml to 10⁹ CFU/ml.

6. The composition according to any of the claims 1 to 4, wherein the strain of *Torulaspora delbrueckii* has a proportion from 0.1 % by weight to 5 % by weight, in particular 0.1 % by weight to 4 % by weight, preferably 0.1% by weight to 2 % by weight, based on the total weight of the composition.

7. The composition according to any of the preceding claims, wherein the betaine has a proportion from 0.005 % by weight to 20 % by weight, in particular 0.5 % by weight to 15 % by weight, preferably 4 % by weight to 12 % by weight, based on the total weight of the composition.

8. The composition according to any of the preceding claims, wherein the composition further comprises a stabilizer, preferably fermentable stabilizer, in particular selected from the group consisting of polyol, non-ionic surfactant, monosaccharide, oligosaccharide, polysaccharide and mixtures of at least two of the aforementioned stabilizers.

9. The composition according to claim 8, wherein the polyol is selected from the group consisting of propylene glycol, dipropylene glycol, ethylene glycol, polyethylene glycol, glycerin and mixtures of at least two of the aforementioned polyols.

10. The composition according to claim 8, wherein the non-ionic surfactant is a fatty acid ester, in particular selected from the group consisting of glycerol monooleate, polyoxyethylene ester of sorbitol with oleic acid, palmitic acid, stearic acid, capric acid, caprylic acid and mixtures of at least two of the aforementioned fatty acid esters.

11. The composition according to any of the preceding claims, wherein the composition further comprises an antioxidant, in particular selected from the group consisting of sulfur dioxide, tocopherols, ascorbic acid and mixtures of at least two of the aforementioned antioxidants.

12. The composition according to any of the preceding claims, wherein the composition further comprises a preservative, in particular selected from the group consisting of citric acid, ascorbic acid, sorbic acid, propionic acid, acetic acid and mixtures of at least two of the aforementioned preservatives.

13. The composition according to any of the preceding claims, wherein the composition is in the form of an aqueous liquid, in particular aqueous solution.

14. The composition according to any of the claims 1 to 12, wherein the composition is in the form of a solid, in particular lyophilized, composition.

15. Use of a composition according to any of the preceding claims for controlling and/or combatting a fungal plant pathogen and/or preventing and/or treating a fungal disease in a plant.
